# EUROPÄISCHE PATENTSCHRIFT

(11) **EP 2 426 673 B1**
(45) Veröffentlichungstag und Bekanntmachung des Hinweises auf die Patenterteilung: **31.10.2012**
(21) Anmeldenummer: 10305949.9
(22) Anmeldetag: 03.09.2010
(51) Int. Cl.: H01B 7/28, G02B 6/44, H01B 7/04, H01B 7/18

(54) **Unterwasserleitung**
Underwater cable
Câble sous-marine

(43) Veröffentlichungstag der Anmeldung: 07.03.2012
(73) Patentinhaber: Nexans, 75008 Paris (FR)
(72) Erfinder: Ulfig, Peter, 54552, Mehren (DE); Dr. Cornelissen, Christian, 41238, Mönchengladbach (DE); Winkelbauer, Walter, 47057, Duisburg (DE)
(74) Vertreter: Taruttis, Stefan Georg

(56) Entgegenhaltungen:
- DE-A1- 2 614 807
- DE-A1- 3 005 615
- DE-A1- 3 444 500
- DE-U1- 8 718 050
- US-A1- 2009 101 387

## Beschreibung

Die Erfindung betrifft eine Rund- oder Flachleitung, insbesondere eine Leitung mit mindestens zwei, vorzugsweise mit drei Leitern, die jeweils eine umfängliche Isolierung aufweisen und daher auch als Adern bezeichnet werden, und von einem gemeinsamen Innenmantel und einem Außenmantel eingefasst sind, die insbesondere zur Verwendung als Unterwasserleitung geeignet ist, insbesondere zur Verwendung unter Wasser, z.B. in Trinkwasser. Bei Rundleitungen sind die Adern verseilt.

Die erfindungsgemäße Leitung weist in Kombination mit einer guten Elastizität, die eine dichtende Umfassung der Leitung in einer die Leitung form- und/oder kraftschlüssig einfassenden Klemme erlaubt, die Trinkwassereignung und überdies die Beständigkeit der Leitung gegen Mikrobenbefall auf, insbesondere gegen Bakterienbewuchs.

### Stand der Technik

Die DE 2614807 A1 beschreibt eine elektrische Leitung, bei der drei Leiter, die jeweils isoliert sind, in einem Innenmantel aus Gummi angeordnet sind, welcher wiederum von einer dünnen Polyurethanhülle umgeben ist. Zwischen dem Innenmantel und der Polyurethanhülle ist eine Zwischenschicht aus Kunststoffbändern bzw. -fäden angeordnet. Durch die äußere Polyurethanhülle soll die Leitung abriebfest und kerbfest sein, sowie eine sehr gute Ölbeständigkeit und chemische Beständigkeit aufweisen.

Die DE 3444500 A1 beschreibt ein elektrisches Kabel mit zumindest zwei Adern die von einem Innenmantel aus synthetischem vernetztem Gummi und einem darauf aufliegenden mikrobenbeständigen Polyurethanmantel umgeben sind.

### Aufgabe der Erfindung

Es ist bislang keine elektrische Leitung bekannt, die zur Verwendung als Unterwasserleitung, insbesondere zur Verwendung in Trinkwasser geeignet und überdies gegen Mikrobenbefall beständig ist und eine hohe Flexibilität aufweist. Der Erfindung stellt sich daher die Aufgabe, eine entsprechend gegen Mikroben beständige und zur Verwendung in Trinkwasser geeignete elektrische Leitung bereitzustellen, die z.B. nicht von Mikroben bewachsen wird und vorzugsweise keine schädlichen Verbindungen in das umgebende Wasser abgibt, die überdies durch form- und/oder kraftschlüssiges Einklemmen dichtend an ein Gehäuse anschließbar ist.

Es ist bekannt, dass gegen bakterielles Wachstum beständiges Polyurethan dahingehend nachteilig ist, dass es unter mechanischer Belastung, z.B. in einer Klemmhülse oder -muffe, fließt bzw. sich plastisch verformt und eine ursprünglich kraftschlüssige Dichtung undicht werden kann. Weiter ist bekannt, dass Gummimischungen, die zur Verwendung in Trinkwasser geeignet sind und eine hohe Wasserbeständigkeit aufweisen, insbesondere Gummimischungen auf EPDM-Basis in wässriger Umgebung nicht gegen Mikrobenbefall beständig sind, bzw. nach Lagerung in Wasser oberflächlich Bakterien aufweisen. Gegenwärtig wird angenommen, dass der Mikrobenbefall bei Gummimischungen beim Einsatz im Wasser auf funktionelle Zuschlagstoffe zurückgeht, die von Mikroben, insbesondere Bakterien, verstoffwechselt werden.

Bei der Auswahl geeigneter Gummimischungen, z.B. auf Basis von EPDM, besteht ein Problem darin, dass solche funktionellen Zuschlagsstoffe für ein ausgewogenes Eigenschaftsspektrum der Gummimischung wesentlich sein können, wie z.B. die Elastizität und Wasserbeständigkeit, sodass diese nicht ohne weiteres aus der Mischung weggelassen werden können.

Die Erfindung löst die Aufgabe mit den Merkmalen der Ansprüche, und stellt insbesondere eine Leitung bereit, die durch ihren Aufbau eine hohe Wasserbeständigkeit, eine hohe Flexibilität, z.B. eine hohe Beständigkeit gegen Biege- und/oder Torsionsbelastungen aufweist, und überdies mikrobenbeständig und trinkwassergeeignet ist.

Generell weist die erfindungsgemäße Leitung auf oder besteht aus zumindest zwei Leitern, die jeweils von einer Isolierschicht umgeben sind, einen Innenmantel aus synthetischen vernetztem Gummi und einen Außenmantel aus Polyurethan, wobei auf dem Innenmantel ein Zwischenmantel aus synthetischem vernetztem Gummi aufliegt und der Außenmantel auf dem Zwischenmantel aufliegt und aus einer gegen mikrobiellen Bewuchs beständigen vernetzten Polyurethanzusammensetzung besteht, wobei optional in der Grenzfläche zwischen Zwischenmantel und Außenmantel ein Netzgewebeband aus Polyamid angeordnet ist und weiter optional ein Gummikern im inneren Zwickelvolumen ist.

Die erfindungsgemäße Leitung weist einen Außenmantel auf, der aus mikrobenbeständigem Polyether-Polyurethan besteht. Innerhalb des Außenmantels sind die verseilten, jeweils isolierten Leiter (Adern) angeordnet und von einem Innenmantel aus Gummi und einem diesen unmittelbar umfassenden Zwischenmantel aus Gummi umgeben. Zwischen dem Zwischenmantel und dem Außenmantel ist ein Netzgewebeband angeordnet, z.B. aus Aramid (z.B. Kevlar), das form- und kraftschlüssig zwischen dem Zwischenmantel und dem Außenmantel angeordnet ist.

Die erfindungsgemäße Leitung weist daher auf oder besteht aus 2, 3 oder mehr durch eine Isolierschicht isolierten Leitern, die insbesondere verseilt sind und in deren Mitte vorzugsweise ein Kernelement aus Gummi angeordnet ist, die unmittelbar von einem extrudierten Innenmantel aus Gummi, einem den Innenmantel unmittelbar umfassenden Zwischenmantel aus wasserfestem Gummi, einem Außenmantel aus Polyurethan und optional einem zwischen Außenmantel und Zwischenmantel angeordneten bandierten Netzwebeband umgeben sind. Das bandierte Netzgewebeband verbindet Zwischenmantel und Außenmantel durch Form- und Kraftschluss und besteht vorzugsweise aus Polyamid, z.B. Aramid.

Dieser Aufbau der Leitung vereinigt die geforderten Eigenschaften, dass der Innenmantel mit dem Zwischenmantel die dauerhafte Gummielastizität bereitstellt, die für eine kraft- und formschlüssige Umfassung zum dauerhaft dichtenden Anschluss durch eine Gehäuseöffnung erforderlich ist, mit der Mikrobenbeständigkeit des Außenmantels aus Polyurethan und mit der mechanischen Beständigkeit des Verbunds dieser Mäntel. Dabei stellt das bandierte Netzgewebeband zwischen dem Zwischenmantel und dem daran anliegenden bzw. aufextrudierten Außenmantel den Verbund zwischen Zwischenmantel und Außenmantel her und auch eine höhere mechanische Stabilität gegen umfänglich einwirkende Kräfte, z.B. beim form- und kraftschlüssigen Einfassen der Leitung in einer klemmenden Öffnung, z.B. einer Muffe oder eines Gehäuses. Der Zwischenmantel aus Gummi, welches wasserbeständig ist und sich durch eine Trinkwassereignung auszeichnet, stellt eine erste Wasserbeständigkeit der Leitung bereit und insbesondere deren Eignung für Trinkwasser, während der Innenmantel, der einerseits die isolierten Leiter form- und kraftschlüssig umfasst und andererseits form-und kraftschlüssig vom Zwischenmantel umfasst ist, aus einem hoch wasserbeständigen Gummi bestehen kann, das eine höhere Wasserbeständigkeit als der Zwischenmantel aufweist aber nicht trinkwassergeeignet ist.

Bevorzugt besteht daher der Innenmantel aus hoch wasserbeständigem Gummi auf Basis von EPDM, das nicht trinkwassergeeignet ist, insbesondere aus einer vernetzten Mischung auf Basis von EPDM, die den Anforderungen 3GM2 gemäß DIN VDE 0207 Teil 21 entspricht und darüber hinaus eine hohe thermische Stabilität (z.B. nachgewiesen durch Arrhenius-Lebensdauerprüfung mit einer Lebensdauer von mehr als 12 Jahren bei 90°C) und eine sehr geringe Wasseraufnahme im deionisierten Wasser von weniger als 3mg/cm² nach 3 Jahren Lagerung bei 70°C aufweist.

Der Zwischenmantel besteht aus einem wasserbeständigen und trinkwassergeeigneten vernetzten EPDM-Compound, das den Anforderungen 3GM2 gemäß DIN VDE 0207 Teil 21 entspricht und darüber hinaus die Anforderungen der zur Prüfung der Trinkwassertauglichkeit maßgeblichen KTW-Leitlinie 1.3.13 des Umweltbundesamtes für Kategorie C erfüllt und zudem eine sehr geringe Wasseraufnahme auch bei höheren Temperaturen aufweist, zum Beispiel eine Wasseraufnahme im Trinkwasser von weniger als 4 mg/cm² nach einem Jahr Lagerung bei 70°C.

Der Außenmantel besteht aus mikrobenbeständigem Polyether-Polyurethan, das trinkwassergeeignet nach genannter KTW-Leitlinie ist.

Der Aufbau der erfindungsgemäßen Leitung führt dazu, dass der Innenmantel aus einer Gummimischung bestehen kann, die Zuschlagstoffe enthält, die eine hohe Wasserbeständigkeit bewirken und nicht trinkwassergeeignet ist, da der Innenmantel umfänglich von dem daran anliegenden Zwischenmantel umschlossen ist.

Der Außenmantel der erfindungsgemäßen Leitung kann aus nicht dauerhaft elastischem Polymer bestehen, da Innenmantel und Zwischenmantel sowie das diese umfassende bandierte Netzgewebeband eine ausreichende dauerhafte Gummielastizität und mechanische Stabilität des Leitungsaufbaus bewirken. Daher weist die Leitung auch mit dem Außenmantel aus Polyether-Polyurethan eine dauerhafte Gummielastizität bzw. Stabilität auf, die eine dauerhafte form- und kraftschlüssige umfängliche Dichtung durch eine Muffe oder Gehäuseöffnung erlauben.

Der Außenmantel aus Polyurethan hat überdies den Vorteil, der Leitung eine hohe Abriebfestigkeit und Chemikalienbeständigkeit zu verleihen, ohne dass durch diesen Außenmantel die Wasserbeständigkeit oder dauerhafte Gummielastizität beeinträchtigt würde.

Die erfindungsgemäße Leitung weist eine hohe Flexibilität auf, die sich z.B. darin zeigt, dass die Leitung in einem wassergefüllten Druckbehälter mit zwei üblichen Kabeldurchführungen angeordnet ist und der Druckbehälter für 90 Tage mit 5bar bei 70°C beaufschlagt wird, wobei kein Wasseraustritt an den Kabeldurchführungen beobachtet wird.

Der Außenmantel besteht aus einer Zusammensetzung auf Basis von vernetztem Polyether-Polyurethan, dessen Trinkwasserbeständigkeit (gemäß KTW-Leitlinie des deutschen Umweltbundesamtes; Ausrüstungsgegenstände für Rohre; für Kaltwasser) und Mikrobenbeständigkeit (DVGW-Arbeitsblatt W270) durch ein entsprechendes Prüfzertifikat eines autorisierten Prüfinstituts belegt sind.

Bevorzugt besteht der Außenmantel aus einem Polyether- Polyurethan, z.B. demjenigen, das unter der Bezeichnung Elastollan von der Firma BASF erhältlich ist, insbesondere dem Typ Elastollan 1185A-10T.

Erfindungsgemäß wird eine Leitung mit elektrischen und/oder optischen Leitern bereitgestellt und dessen Verwendung als eine zur Platzierung in Trinkwasser geeignete Unterwasserleitung. Bevorzugt ist die Leitung eine elektrische Leitung mit zumindest 2 elektrischen Leitern. In bevorzugter Ausführung sind die Leiter Litzenleiter. Alternativ können die Leiter auch optische Leiter sein. Die Leitung eignet sich insbesondere zur Verwendung als Tauchmotorleitung, wobei die Leitung bevorzugt zumindest 2, bevorzugter 3 Litzenleiter hat, die jeweils eine umfängliche Isolierung aufweisen. Bei Verwendung als Tauchmotorleitung, z.B. als Versorgungsleitung für einen unter Wasser angeordneten Motor, ist die Leitung zumindest abschnittsweise in Wasser, insbesondere in Trinkwasser angeordnet. Generell ist die erfindungsgemäße Leitung bei entsprechender Dimensionierung für die Verwendung in der Niederspannungs- oder Mittelspannungsebene vorgesehen. In Ausführungen der Leitung, die für eine Spannung von mindestens 3,6/6kV ausgelegt sind, weist die Leitung zwischen Isolierung und Litzen eine elektrisch leitfähige Schicht auf, die aus einer elektrisch leitfähigen vernetzten Polymermischung mit einem elektrisch leitenden Zusatz besteht, insbesondere Ruß. Eine solche elektrisch leitende Ummantelung aus einer elektrisch leitfähigen vernetzten Polymermischung zwischen Litzenleitern und deren umfänglicher Isolierung minimiert die Feldbelastung der Isolierung.

Die Litzenleiter mit umfänglicher Isolierung sind miteinander verseilt, vorzugsweise um ein Kernelement aus Gummi angeordnet und von einem gemeinsamen Innenmantel aus Gummi umgeben, der unmittelbar von einem Zwischenmantel aus Gummi umgeben ist, und dieser wiederum von einem Außenmantel aus Polyurethan. Zwischen dem Zwischenmantel und dem Außenmantel ist ein bandiertes Netzgewebeband aus Polyamid angeordnet, beispielsweise als Polyamid-Netzgewebeband, dessen Fasern vorzugsweise umfänglich geschlossen sind. Besonders bevorzugt ist das Netzgewebeband kraft- und formschlüssig zwischen dem Innenmantel und dem Außenmantel angeordnet. Das Netzgewebeband kann in der Grenzfläche zwischen Zwischenmantel und Außenmantel angeordnet sein, oder in einer nachfolgend beschriebenen Ausführungsform mit einer Querdiffusionsschutzschicht, die auf dem Zwischenmantel angeordnet ist, zwischen der Querdiffusionsschutzschicht und dem Außenmantel.

Die zur Verwendung als Unterwasserleitung vorgesehene elektrische Leitung kann als Flachleitung ausgebildet sein und zwei oder mehr, insbesondere 3 in einer gemeinsamen Ebene angeordnete, jeweils umfänglich isolierte Litzenleiter aufweisen, oder die Form einer Rundleitung haben, bei dem zwei oder mehr Litzenleiter, insbesondere drei Litzenleiter, jeweils eine umfängliche Isolierung aufweisen und miteinander verseilt angeordnet sind, sodass die umfänglichen Isolierungen jedes Litzenleiters mit umfänglichen Isolierungen benachbarter Litzenleiter in Kontakt stehen, wobei alle Leiter formschlüssig von dem Innenmantel umgeben sind, der von dem Zwischenmantel und dem diesen umfassenden Außenmantel umgeben ist, die jeweils bevorzugt eine radial einheitliche Dicke aufweisen. Wenn die Leitung eine Rundleitung ist, weisen Zwischenmantel und Außenmantel vorzugsweise jeweils einen ringförmigen Querschnitt auf.

Wenn die erfindungsgemäß verwendete Leitung einen runden Querschnitt aufweist, in welcher drei oder mehr Litzenleiter um eine gemeinsame Längsmittelachse angeordnet sind, ist vorzugsweise in der gemeinsamen Längsmittelachse ein Gummikern als Kernelement angeordnet.

In einer Ausführungsform weist die Leitung auf dem Zwischenmantel eine zusätzliche Querdiffusionsschutzschicht auf, die wasserdampfdicht ist und den Zwischenmantel umfänglich umfasst und insbesondere eine Metallfolie oder eine wasserdampfdichte Kunststofffolie ist, z.B. eine metallisch beschichtete Kunststofffolie. Bei Anordnung eines Netzgewebebands zwischen dem Zwischenmantel und dem Außenmantel ist die Querdiffusionsschutzschicht zwischen dem Zwischenmantel und dem Netzgewebeband angeordnet. Eine solche Querdiffusionsschutzschicht weist optional ein- oder beidseitig eine Klebstoffschicht auf, insbesondere auf der dem Zwischenmantel zugewandten Seite. Optional weist die Querdiffusionsschutzschicht keinen Klebstoff auf der dem Zwischenmantel abgewandten Seite auf.

Vorzugsweise weist die Leitung mit einer Querdiffusionsschutzschicht, die eine auf der dem Zwischenmantel abgewandten Seite eine metallische Beschichtung hat oder eine Metallfolie ist, eine Beilauflitze auf der Querdiffusionsschutzschicht, bzw. zwischen der Querdiffusionsschutzschicht und dem Netzgewebeband bzw. dem Außenmantel auf. Eine solche Beilauflitze, die z.B. ein nicht isolierter Draht ist, ist in elektrischem Kontakt mit der Querdiffusionsschutzschicht und kann Verwendung als Erdungsanschluß der Leitung finden.

Bei der Herstellung der Leitung kann die Querdiffusionsschutzschicht durch Bandierung, Längseinlauf oder andere an sich bekannte Verfahren auf den Zwischenmantel aufgebracht werden, und anschließend optional ein Netzgewebeband, bevor der Außenmantel mittels Extrusion aufgebracht wird. Entsprechend überlappen generell die längs bzw. spiralig der Leitung verlaufenden Kanten der Querdiffusionsschutzschicht.

### Genaue Beschreibung der Erfindung

Die Erfindung wird nun genauer mit Bezug auf die Figuren beschrieben, die schematisch in
- Figur 1 einen Querschnitt durch eine erfindungsgemäße Leitung zeigen, die für die erfindungsgemäße Verwendung besonders geeignet ist und
- Figur 2 eine Ausführungsform der Leitung mit Querdiffusionsschutzschicht zeigen.

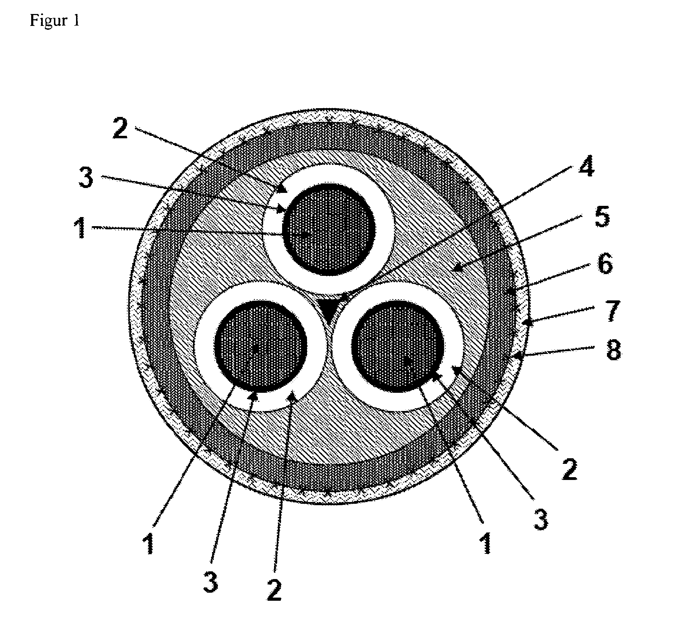

Die Figur 1 zeigt am Beispiel einer dreiadrigen Rundleitung, das schematisch im Querschnitt gezeigt ist, eine Ausführungsform der Leitung zur Verwendung als Unterwasserleitung. Die Leitung zeigt als Beispiel für Leiter drei Litzenleiter 1, deren Litzen bevorzugt aus Kupfer oder Aluminium bestehen. Die Litzenleiter 1 sind von jeweils einer Isolierschicht bzw. Isolierung 2 umgeben. Entsprechend einer Ausführungsform ist zwischen dem Litzenleiter 1 und der Isolierschicht 2, die den Litzenleiter umgibt, eine Schicht aus elektrisch leitfähiger vernetzter Polymermischung 3 angeordnet.

Der von den umfänglichen Isolierungen 2 der Litzenleiter 1 begrenzte Querschnitt (Zwickelvolumen) wird vorzugsweise im Wesentlichen von einem Kernelement 4 aus Gummi eingenommen, das z.B. einen dreieckigen Querschnitt haben kann.

Die Litzenleiter 1, die jeweils umfänglich isoliert, miteinander verseilt und um eine gemeinsame Längsachse angeordnet sind, sind von einem Innenmantel 5 eingefasst. Der Innenmantel 5 hat einen kreisförmigen Außenumfang. Der Innenmantel 5 ist von einem unmittelbar anliegenden Zwischenmantel 6 eingefasst, der eine radial einheitliche Dicke hat, die bei der gezeigten Rundleitung einen ringförmigen Querschnitt bildet. Zwischen dem Außenmantel 7 und dem Innenmantel 5 ist der Zwischenmantel 6 angeordnet, der eine radial einheitliche Dicke hat und unmittelbar am Innenmantel 5 aufliegt. Entsprechend der bevorzugten Ausführungsform ist ein bandiertes Netzgewebeband 8, beispielsweise aus Polyamid 66, an der Grenzfläche zwischen Zwischenmantel 6 und Außenmantel 7 angeordnet. Das bandierte Netzgewebeband 8 ist formschlüssig, vorzugsweise auch stoffschlüssig entlang der Grenzfläche von Zwischenmantel 6 und Außenmantel 7 angeordnet.

Generell wird die erfindungsgemäße Leitung vorzugsweise dadurch hergestellt, dass die verseilten Adern zunächst in einem kontinuierlichen Extrusionsprozess in einem Arbeitsgang mit dem Innenmantel 5 und dem Zwischenmantel 6 umhüllt und die Mäntel anschließend vernetzt werden. Nach der Vernetzung von Innen- und Zwischenmantel wird in einem weiteren Arbeitsgang um den Zwischenmantel 6 das Netzgewebeband 8 bandiert. Anschließend wird der Außenmantel 7 durch Extrusion auf den Zwischenmantel 6 bzw. das Netzgewebeband 8 aufgebracht.

Bevorzugt werden der Innenmantel 5 und der Zwischenmantel 6 in einem Koextrusionsverfahren aufgebracht, wobei ein Zweifach-Extruderkopf mit entsprechendem Werkzeug und zwei Extruder eingesetzt werden.

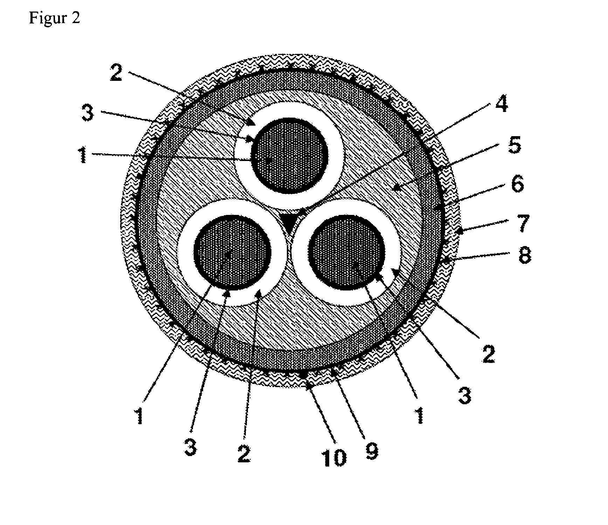

Die Figur 2 zeigt einen Aufbau der Leitung, in dem auf dem Außenumfang des Zwischenmantels 6 eine Querdiffusionsschutzschicht 9 angeordnet ist. Diese Querdiffusionsschutzschicht 9 kann auf ihrer Außenseite, die dem Zwischenmantel 6 abgewandt ist, bzw. dem Außenmantel 7 zugewandt ist, eine Beilauflitze 10 aufweisen, wenn die Außenseite der Querdiffusionsschutzschicht 9 metallisch ist.

### Bezugszeichenliste:

- 1: Leiter
- 2: Isolierschicht
- 3: elektrisch leitfähige vernetzte Polymermischung
- 4: Kernelement

- 5: Innenmantel
- 6: Zwischenmantel
- 7: Außenmantel
- 8: Netzgewebeband
- 9: Querdiffusionsschutzschicht
- 10: Beilauflitze

## Patentansprüche

1. Leitung, die zumindest zwei Leiter (1) aufweist, die jeweils von einer Isolierschicht (2) umgeben sind,
einen Innenmantel (5) aus synthetischem vernetztem Gummi und einen Außenmantel (7), der aus einer mikrobenbeständigen vernetzten Polyurethanzusammensetzung besteht, **dadurch gekennzeichnet, dass**
die Leitung eine trinkwassergeeignete und gegen mikrobiellen Bewuchs beständige Unterwasserleitung ist und dass auf dem Innenmantel (5) ein Zwischenmantel (6) aus synthetischem vernetztem Gummi aufliegt und der Außenmantel (7) auf dem Zwischenmantel (6) aufliegt.

2. Leitung nach Anspruch 1, **dadurch gekennzeichnet, dass** der Innenmantel (5) aus einer hoch wasserfesten vernetzten Gummimischung besteht, der Zwischenmantel (6) aus einer trinkwassergeeigneten vernetzten Gummimischung besteht und der Außenmantel (7) aus einem trinkwassergeeigneten, gegen mikrobiellen Bewuchs beständigen vernetzten Polyether-Polyurethan besteht.

3. Leitung nach einem der voranstehenden Ansprüche, **dadurch gekennzeichnet, dass** zwischen Zwischenmantel (6) und Außenmantel (7) ein Netzgewebeband (8) aus Polyamid angeordnet ist.

4. Leitung nach einem der voranstehenden Ansprüche, **dadurch gekennzeichnet, dass** auf dem Zwischenmantel (6) eine Querdiffusionsschutzschicht (9) angeordnet ist.

5. Leitung nach Anspruch 4, **dadurch gekennzeichnet, dass** die
Querdiffusionsschutzschicht (9) eine Kunststofffolie ist, die auf einer Seite eine metallische Beschichtung aufweist, oder eine Metallfolie ist.

6. Leitung nach Anspruch 5, **dadurch gekennzeichnet, dass** die
Querdiffusionsschutzschicht (9) eine Kunststofffolie ist, die auf ihrer dem Zwischenmantel (6) abgewandten Seite eine metallische Beschichtung aufweist, oder eine Metallfolie ist, und auf der dem Zwischenmantel (6) abgewandten Seite eine Beilauflitze (10) angeordnet ist.

7. Leitung nach einem der voranstehenden Ansprüche, **dadurch gekennzeichnet, dass** die Leiter (1) drei Litzenleiter (1) mit jeweils einer Isolierschicht (2) sind, die verseilt sind und ein Zentralelement (4) aus Gummi in dem von den drei Leitern (1) eingefassten Querschnitt angeordnet ist.

8. Leitung nach einem der voranstehenden Ansprüche, **dadurch gekennzeichnet, dass** jeder Leiter (1) zwischen sich und der ihn umgebenden Isolierschicht (2) eine elektrisch leitfähige vernetzte Polymermischung (3) aufweist.

9. Leitung nach einem der voranstehenden Ansprüche, **dadurch gekennzeichnet, dass** die Leitung für eine elektrische Spannungsebene im Bereich von U₀/U von mindestens 1,8/3kV eingerichtet ist.

10. Verwendung einer Leitung nach einem der voranstehenden Ansprüche als Tauchmotorleitung.

11. Verfahren zur Herstellung einer Leitung nach einem der Ansprüche 1 bis 9 mit den Schritten des Bereitstellens von zumindest 2 verseilten, jeweils mit einer Isolierschicht (2) versehenen Leitern (1), Extrudieren der Gummimasse für den Innenmantel (5) um die Isolierschichten (2) der Leiter (1), Extrudieren der Gummimasse für den Zwischenmantel (6) auf den Innenmantel (5), Vernetzen der Gummimassen für den Innenmantel (5) und den Zwischenmantel (6), Anordnen des Netzgewebebands (8) auf dem Zwischenmantel (6) und Extrudieren der Polyether-Polyurethan-Mischung für den Außenmantel (7) auf das Netzgewebeband (8).

12. Verfahren nach Anspruch 11, **dadurch gekennzeichnet, dass** nach dem Vernetzen der Gummimasse für den Zwischenmantel (6) und vor dem Anordnen des Netzgewebebands (8) eine Querdiffusionsschutzschicht (9) auf dem Zwischenmantel (6) angeordnet wird.

13. Verfahren nach Anspruch 12, **dadurch gekennzeichnet, dass** die Querdiffusionsschutzschicht (9) eine Kunststofffolie ist, die eine metallische Beschichtung aufweist oder eine Metallfolie ist.

14. Verfahren nach Anspruch 13, **dadurch gekennzeichnet, dass** die Querdiffusionsschutzschicht (9) eine Kunststofffolie ist, die eine metallische Beschichtung auf ihrer dem Zwischenmantel (6) abgewandten Seite aufweist, oder eine Metallfolie ist und nach Anordnen der Querdiffusionsschutzschicht (9) auf den Zwischenmantel (6) eine Beilauflitze (10) längs der Leitung auf der Querdiffusionsschutzschicht (9) angeordnet wird.

## Claims

1. Cable which has at least two conductors (1) each surrounded by an insulation layer (2),
an inner sheath (5) composed of synthetic crosslinked rubber and an outer sheath (7) which is composed of a microbe-resistant crosslinked polyurethane compound, **characterized in that** the cable is an underwater cable which is suitable for drinking water and which is resistant to microbial growth, and **in that** an intermediate sheath (6) composed of synthetic crosslinked rubber is supported on the inner sheath (5), and the outer sheath (7) is supported on the intermediate sheath (6).

2. Cable according to Claim 1, **characterized in that** the inner sheath (5) is composed of a highly water-resistant crosslinked rubber mixture, the intermediate sheath (6) is composed of a crosslinked rubber mixture which is suitable for drinking water, and the outer sheath (7) is composed of a crosslinked polyether polyurethane which is suitable for drinking water and which is resistant to microbial growth.

3. Cable according to one of the preceding claims, **characterized in that** a mesh fabric strip (8) composed of polyamide is arranged between the intermediate sheath (6) and the outer sheath (7).

4. Cable according to one of the preceding claims, **characterized in that** a cross-diffusion prevention layer (9) is arranged on the intermediate sheath (6).

5. Cable according to Claim 4, **characterized in that** the cross-diffusion prevention layer (9) is a plastic foil which has a metallic coating on one side, or is a metal foil.

6. Cable according to Claim 5, **characterized in that** the cross-diffusion prevention layer (9) is a plastic foil which has a metallic coating on its side facing away from the intermediate sheath (6), or is a metal foil, and a filler strand (10) is arranged on the side facing away from the intermediate sheath (6).

7. Cable according to one of the preceding claims, **characterized in that** the conductors (1) are three stranded conductors (1) with in each case one insulating layer (2), said stranded conductors being stranded together, and a central element (4) composed of rubber is arranged in the cross section enclosed by the three conductors (1).

8. Cable according to one of the preceding claims, **characterized in that** each conductor (1) has, between itself and the insulating layer (2) surrounding it, an electrically conductive crosslinked polymer mixture (3).

9. Cable according to one of the preceding claims, **characterized in that** the cable is designed for an electrical voltage level in the region of U₀/U of at least 1.8/3 kV.

10. Use of a cable according to one of the preceding claims as a submersible motor cable.

11. Method for producing a cable according to one of Claims 1 to 9, having the steps of providing at least two conductors (1) which are stranded together and which are each provided with an insulating layer (2), extruding the rubber compound for the inner sheath (5) around the insulating layers (2) of the conductors (1), extruding the rubber compound for the intermediate sheath (6) onto the inner sheath (5), crosslinking the rubber compounds for the inner sheath (5) and the intermediate sheath (6), arranging the mesh fabric strip (8) on the intermediate sheath (6), and extruding the polyether-polyurethane mixture for the outer sheath (7) onto the mesh fabric strip (8).

12. Method according to Claim 11, **characterized in that**, after the crosslinking of the rubber compound for the intermediate sheath (6) and before the arrangement of the mesh fabric strip (8), a cross-diffusion prevention layer (9) is arranged on the intermediate sheath (6).

13. Method according to Claim 12, **characterized in that** the cross-diffusion prevention layer (9) is a plastic foil which has a metallic coating, or is a metal foil.

14. Method according to Claim 13, **characterized in that** the cross-diffusion prevention layer (9) is a plastic foil which has a metallic coating on its side facing away from the intermediate sheath (6), or is a metal foil, and a filler strand (10) is arranged along the cable on the cross-diffusion prevention layer (9) after the arrangement of the cross-diffusion prevention layer (9) on the intermediate sheath (6).

## Revendications

1. Câble conducteur présentant
au moins deux conducteurs (1) entourés chacun par une couche isolante (2),
une enveloppe intérieure (5) en caoutchouc synthétique réticulé et une enveloppe extérieure (7) constituée par une composition de polyuréthane réticulé résistant aux bactéries,
**caractérisé en ce que**
le câble conducteur est un câble conducteur immergé convenant pour l'eau potable et résistant à la croissance microbienne,
**en ce qu'**une enveloppe intermédiaire (6) en caoutchouc synthétique réticulé repose contre l'enveloppe intérieure (5) et
**en ce que** l'enveloppe extérieure (7) repose contre l'enveloppe intermédiaire (6).

2. Câble conducteur selon la revendication 1, **caractérisé en ce que** l'enveloppe intérieure (5) est constituée d'un mélange de caoutchouc synthétique réticulé à haute résistance à l'eau, **en ce que** l'enveloppe intermédiaire (6) est constituée d'un caoutchouc synthétique réticulé convenant pour l'eau potable et **en ce que** l'enveloppe extérieure (7) est constituée d'un polyéther-polyuréthane réticulé résistant à la croissance microbienne et convenant pour l'eau potable.

3. Câble conducteur selon l'une des revendications précédentes, **caractérisé en ce qu'**un ruban (8) en treillis tissé de polyamide est disposé entre l'enveloppe intermédiaire (6) et l'enveloppe extérieure (7).

4. Câble conducteur selon l'une des revendications précédentes, **caractérisé en ce qu'**une couche (9) de protection contre la diffusion transversale est disposée sur l'enveloppe intermédiaire (6).

5. Câble conducteur selon la revendication 4, **caractérisé en ce que** la couche (9) de protection contre la diffusion transversale est une feuille de matière synthétique dont une face est dotée d'un revêtement métallique ou une feuille de métal.

6. Câble conducteur selon la revendication 5, **caractérisé en ce que** la couche (9) de protection contre la diffusion transversale est une feuille de matière synthétique dont la face non tournée vers l'enveloppe intermédiaire (6) est dotée d'un revêtement métallique ou est une feuille métallique dont la face non tournée vers l'enveloppe intermédiaire (6) est dotée d'une tresse (10).

7. Câble conducteur selon l'une des revendications précédentes, **caractérisé en ce que** les conducteurs (1) sont trois conducteurs tressés (1) qui présentent chacun une couche isolante (2) et qui sont torsadés, la section transversale entourée par les trois conducteurs (1) étant occupée par un élément central (4) en caoutchouc.

8. Câble conducteur selon l'une des revendications précédentes, **caractérisé en ce que** chaque conducteur (1) présente un mélange polymère réticulé (3) électriquement conducteur entre lui-même et la couche isolante (2) qui l'entoure.

9. Câble conducteur selon l'une des revendications précédentes, **caractérisé en ce que** le câble conducteur est conçu pour un niveau de tension électrique U₀/U d'au moins 1,8/3 kV.

10. Utilisation d'un câble conducteur selon l'une des revendications précédentes comme câble conducteur pour moteur immergé.

11. Procédé de fabrication d'un câble conducteur selon l'une des revendications 1 à 9, le procédé comprenant les étapes qui consistent à :
préparer au moins 2 conducteurs (1) torsadés, chacun doté d'une couche isolante (2),
extruder la pâte de caoutchouc prévue pour l'enveloppe intérieure (5) autour des couches isolantes (2) des conducteurs (1),
extruder la pâte de caoutchouc prévue pour l'enveloppe intermédiaire (6) sur l'enveloppe intérieure (5),
réticuler les pâtes de caoutchouc prévues pour l'enveloppe intérieure (5) et l'enveloppe intermédiaire (6),
placer le ruban (8) en treillis tissé sur l'enveloppe intermédiaire (6) et
extruder le mélange de polyéther et de polyuréthane prévu pour l'enveloppe extérieure (7) sur le ruban (8) en treillis tissé.

12. Procédé selon la revendication 11, **caractérisé en ce qu'**une couche (9) de protection contre la diffusion transversale est placée sur l'enveloppe intermédiaire (6) après la réticulation de la pâte de caoutchouc prévue pour l'enveloppe intermédiaire (6) et avant le placement du ruban (8) en treillis tissé.

13. Procédé selon la revendication 12, **caractérisé en ce que** la couche (9) de protection contre la diffusion transversale est une feuille de matière synthétique dotée d'un revêtement métallique ou une feuille de métal.

14. Procédé selon la revendication 13, **caractérisé en ce que** la couche (9) de protection contre la diffusion transversale est une feuille de matière synthétique dont la face non tournée vers l'enveloppe intermédiaire (6) est dotée d'un revêtement métallique ou est une feuille métallique et **en ce qu'**une tresse (10) est placée dans le sens de la longueur du câble sur la couche (9) de protection contre la diffusion transversale après que la couche (9) de protection contre la diffusion transversale a été placée sur l'enveloppe intermédiaire (6).
